# EUROPÄISCHE PATENTSCHRIFT

(11) **EP 4 200 946 B1**
(45) Veröffentlichungstag und Bekanntmachung des Hinweises auf die Patenterteilung: **30.04.2025**
(21) Anmeldenummer: 21766141.2
(22) Anmeldetag: 18.08.2021
(51) Int. Cl.: H01R 43/042, H02G 1/12, B25B 27/14

(54) **ZUR DURCHFÜHRUNG EINER VERCRIMPUNG AUSGEBILDETE HANDZANGE SOWIE HANDZANGE MIT EINEM ZANGENKOPF**
HAND PLIERS DESIGNED TO CARRY OUT CRIMPING, AND HAND PLIERS COMPRISING A PLIER HEAD
PINCE MANUELLE CONÇUE POUR RÉALISER UN SERTISSAGE ET PINCE MANUELLE POURVUE D'UNE TÊTE DE PINCE

(30) Priorität: 20.08.2020 DE 102020121823
(43) Veröffentlichungstag der Anmeldung: 28.06.2023
(73) Patentinhaber: Rennsteig Werkzeuge GmbH, 98587 Steinbach-Hallenberg (DE)
(72) Erfinder: HOLLAND-MORITZ, Georg, 98587 Steinbach-Hallenberg (DE); WEISHEIT, Benjamin, 98593 Floh-Seligenthal (DE); BRÜCKNER, Michael, 98587 Steinbach-Hallenberg (DE)
(74) Vertreter: Müller, Enno
(86) Internationale Anmeldenummer: PCT/EP2021/072939
(87) Internationale Veröffentlichungsnummer: WO 2022/038186

(56) Entgegenhaltungen:
- EP-A1- 2 672 580
- EP-A1- 3 396 796
- US-A- 4 912 958
- US-A- 5 042 286
- US-A1- 2011 047 790
- US-A1- 2019 312 397

## Beschreibung

### Gebiet der Technik

Die Erfindung betrifft eine zur Durchführung einer Vercrimpung ausgebildete Handzange mit einem feststehenden und einem beweglichen Zangenschenkel sowie einer ersten und einer zweiten Crimpbacke, wobei die erste Crimpbacke durch einen Antriebsstößel beaufschlagt ist.

### Stand der Technik

Handzangen der in Rede stehenden Art sind bekannt, insbesondere zur Verwendung als sogenannte Crimpzangen zum Vercrimpen beziehungsweise Verpressen von Presslingen, wie weiter beispielsweise Aderendhülsen an abisolierte Enden elektrischer Kabel. Beispielsweise wird auf die DE 10 2018 101 159 A1 verwiesen.

Darüber hinaus sind Handzangen bekannt, die insbesondere als zangenartiges Abisolierwerkzeug ausgebildet sind, dabei zugleich aber auch eine Vercrimpung beispielsweise des zuvor abisolierten Kabelendes mit einer Aderendhülse mit demselben Werkzeug ermöglichen. Ein solches Handwerkzeug ist beispielsweise aus der EP 0 540 880 B1 (US 5 500 998) bekannt.

Aus der EP 3 396 796 A1 ist ein Press-, Crimp- oder Schneidwerkzeug gemäß Oberbegriff des Anspruchs 1 bekannt, bei welchem eine beispielsweise Crimpbacke in mechanischer Parallelschaltung über ein elastisches Abstützelement und einen Sensor abgestützt ist. Eine möglichst hohe Steifigkeit ist gleichwohl angestrebt.

Aus der US 5 042 286 A ist ein zangenartiges, als Crimpwerkzeug ausgebildetes Handwerkzeug bekannt, bei welchem eine bewegliche Crimpbacke zur Vercrimpung linear relativ zu einer feststehenden Crimpbacke verfahrbar ist. Gemäß einer Ausgestaltung kann ein Locator zugeordnet zu der feststehenden Crimpbacke vorgesehen sein, wobei der Locator gegen eine Druckfeder beweglich ist.

Aus der US 2019/0312397 A1 ist eine Handzange bekannt, bei welcher eine feststehende und eine verschwenkbare Crimpbacke vorgesehen sind. Die Handzange ist nur zum Vercrimpen ausgebildet.

### Zusammenfassung der Erfindung

Ausgehend von dem dargelegten Stand der Technik stellt sich der Erfindung die Aufgabe, ein Handwerkzeug wie ausgeführt bei handhabungstechnisch günstiger Ausgestaltung vorteilhaft auszubilden.

Diese Aufgabe ist beim Gegenstand des Anspruches 1 gelöst, wobei darauf abgestellt ist, dass die erste und die zweite Crimpbacke mit partiell kammartig ineinandergreifenden Rippen versehen sind, die mit Blick in Richtung einer Einsteckrichtung eines mit einem Pressling versehenen Kabels in eine Crimpöffnung dreieckförmig gestaltet sind, wobei sich in einer unbelasteten Grundstellung ein im Grundriss rechteckiges Crimpmaul ergibt, dass die zweite Crimpbacke in einer Crimpbackenaufnahme der Handzange gegen Federkraft zurückbewegbar ist und dass die erste und die zweite Crimpbacke in einer gemeinsamen Linearführung angeordnet sind.

Die Federkraft kann dabei unmittelbar durch die zweite Crimpbacke, insbesondere durch einen Teilabschnitt der zweiten Crimpbacke oder alternativ durch ein gesondertes Teil aufgebracht sein. So kann beispielsweise die zweite Crimpbacke ein entsprechend wirkendes, weiter beispielsweise angeformtes Federelement unmittelbar oder mittelbar aufweisen. Darüber hinaus kann das die Federkraft aufbringende Federelement ein zu der zweiten Crimpbacke gesondertes Element sein, beispielsweise eine Metall- oder Kunststofffeder, z. B. in Form einer Zylinder-Druckfeder oder einer Schenkelfeder. Bevorzugt wird diesbezüglich eine Kunststofffeder in Form eines elastisch ein- und ausfederbaren Massivelements, weiter beispielsweise in Art eines Schaumstoffelements. Weiter bevorzugt kann diesbezüglich ein Polyurethan-Blockelement als Federelement dienen, gegen welches die zweite Crimpbacke, insbesondere im Zuge einer Vercrimpung, wirkt.

Die gegen Federkraft ermöglichte Rückbewegung beziehungsweise Ausweichbewegung der zweiten Crimpbacke im Zuge einer Vercrimpung ermöglicht ein Verpressen von Presslingen unterschiedlicher, in Verlagerungsrichtung betrachteter Erstreckungsmaße (gegebenenfalls Durchmesser), bei im Wesentlichen gleichbleibendem Verlagerungsweg des insbesondere auf die erste Crimpbacke bevorzugt mittelbar über den Antriebsstößel einwirkenden beweglichen Zangenschenkels. Entsprechend ergibt sich für den Benutzer, insbesondere unabhängig von einem Durchmesser des zu verpressenden Presslings, beispielsweise Aderendhülse, ein zumindest annähernd gleichbleibender Betätigungsweg der Handzange. Die in Abhängigkeit von beispielsweise einem Durchmesser des Presslings sich einstellenden unterschiedlich großen Verlagerungsstrecken insbesondere der ersten Crimpbacke, werden durch die gegen die Federkraft zurückbewegbare zweite Crimpbacke ermöglicht. Die Feder wirkt entsprechend bevorzugt streckenausgleichend.

Weiter wird zufolge der Federeinwirkung auf die zweite Crimpbacke diese nach Durchführung einer Vercrimpung und damit einhergehender Rückverlagerung der ersten Crimpbacke in eine gegebenenfalls anschlagbegrenzte Grundstellung zurückverlagert. Auf eine gekoppelte Mitschleppung der zweiten Crimpbacke über die erste Crimpbacke zur Rückverlagerung der zweiten Crimpbacke kann verzichtet werden.

Bei üblicher Handhabung der Handzange ergibt sich so ein Crimpbereich, der einer Unterseite oder einer Oberseite der Handzange zugeordnet ist. So kann in handhabungstechnisch günstiger Weise ein mit einer im Bereich eines abisolierten Endes mit einer Aderendhülse versehenes Kabel unter im Wesentlichen etwa senkrecht nach oben weisender Ausrichtung des Kabelendes mit der aufgesteckten Aderendhülse unterseitig in den Crimpbereich der Handzange eingeführt werden, wonach durch zangenartige Betätigung der Zangenschenkel die gewünschte Vercrimpung erfolgt. Die Handzange ist dabei in ihrer, der üblichen Handhabung entsprechenden Ausrichtung.

Erfindungsgemäß sind die erste und die zweite Crimpbacke in einer gemeinsamen Linearführung angeordnet. Die Linearführung kann gegebenenfalls zugleich die Crimpbackenaufnahme für die zweite Crimpbacke bilden. Der bevorzugt mit dem beweglichen Zangenschenkel verbundene beziehungsweise über den beweglichen Zangenschenkel beaufschlagte Antriebsstößel wirkt entsprechend bevorzugt linear verlagernd auf die erste Crimpbacke ein, wobei im Zuge einer Vercrimpung über die erste Crimpbacke und den Pressling gegebenenfalls auch die zweite Crimpbacke gegen die Federkraft innerhalb der Linearführung verlagert werden kann. Die Linearführung kann durch konstruktive Mittel unmittelbar innerhalb der Handzange, insbesondere eines Gehäuses der Handzange, gebildet sein. Dabei kann sich mit Bezug auf einen Querschnitt quer zur linearen Verlagerungsrichtung der ersten Crimpbacke beispielsweise eine beidseitig seitliche Führung bevorzugt beider Crimpbacken ergeben, weiter bevorzugt eine den gesamten Umfang der Crimpbacken im Wesentlichen umgebende Führung.

In weiterer Ausgestaltung ist die Handzange als Abisolierzange ausgebildet, wobei mit derselben Handzange zunächst ein Abisolieren eines freien Kabelendes durchgeführt werden kann und anschließend eine Vercrimpung dieses abisolierten Kabelendes mit beispielsweise einer Aderendhülse.

Um insbesondere eine vollständige Vercrimpung, d.h. eine Vollendung des Crimpvorganges, und/oder eines möglichen Abisoliervorgangs sicherzustellen, können die Zangenschenkel gemäß einer möglichen Weiterbildung über eine Zwangssperre zusammenwirken. Diese Zwangssperre lässt bevorzugt im Zuge einer Zangenbetätigung die Bewegung, insbesondere Schwenkbewegung, des beweglichen Zangenschenkels nur in eine Richtung, nämlich bevorzugt die Zangenschließrichtung, zu, bis in eine Zangenschenkel-Stellung, in welcher die Vercrimpung und/oder die Abisolierung sicher vollendet ist. Erst hiernach gibt die Zwangssperre, bevorzugt ohne weitere zusätzliche Einwirkung durch den Benutzer auf die Zwangssperre, die Rückverlagerung des beweglichen Zangenschenkels in die Grundstellung und somit Rückverlagerung insbesondere der ersten Crimpbacke in die Grundstellung frei.

In weiterer Ausgestaltung kann die Zwangssperre auch nach Einleitung eines Vercrimp- oder Abisoliervorganges aber noch vor Erreichen der Selbstaufhebung der Sperre manuell durch den Benutzer aufgehoben werden, bevorzugt durch ein entsprechendes Einwirken auf die Zwangssperre. Dieses Einwirken kann gegebenenfalls werkzeuglos erfolgen.

Dabei kann gemäß einer bevorzugten Ausgestaltung die Zwangssperre zwischen einem Steuerhebel und dem beweglichen Zangenschenkel wirken. Der Steuerhebel wird im Zuge der Zangenbetätigung bevorzugt über den beweglichen Zangenschenkel beaufschlagt, ist aber gegenüber dem beweglichen Zangenschenkel bevorzugt relativ verschwenkbar gehaltert. Diese Relativbeweglichkeit des Steuerhebels zu dem beweglichen Zangenschenkel ist zur Ausbildung der Zwangssperre genutzt.

In weiterer Ausgestaltung kann die Zwangssperre eine ratschenartige Zusammenwirkung zwischen Steuerhebel und beweglichem Zangenschenkel erbringen, die neben der sich einstellenden Rücklaufsperre gegebenenfalls auch als akustisches Signal wahrnehmbar sein kann.

### Kurze Beschreibung der Zeichnungen

Nachstehend ist die Erfindung anhand der beigefügten Zeichnung, die aber lediglich ein Ausführungsbeispiel darstellt, näher erläutert. Es zeigt:
- Fig. 1: eine Handzange der in Rede stehenden Art in perspektivischer Darstellung;
- Fig. 2: in perspektivischer Detaildarstellung eine Zuordnungsstellung eines zu vercrimpenden Kabelendes zu einer Crimpöffnung der Handzange;
- Fig. 3: den Schnitt gemäß der Schnittebene III in Figur 1, die unbelastete Grundstellung der Handzange betreffend;

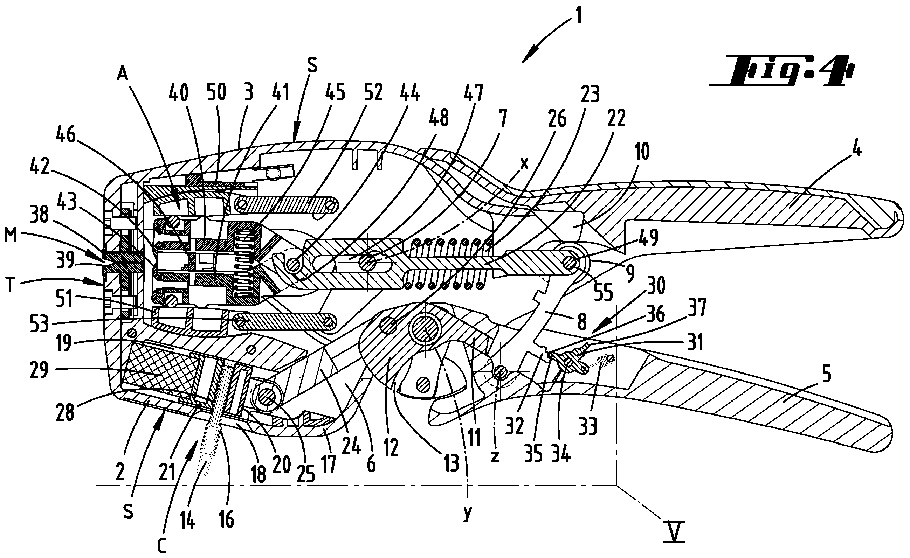

- Fig. 4: eine der Figur 3 entsprechende Schnittdarstellung, jedoch eine Zwischenstellung im Zuge einer Vercrimpung betreffend;
- Fig. 5: die Herausvergrößerung des Bereichs V in Figur 4;
- Fig. 6: eine Folgedarstellung zu der Darstellung in Figur 5, eine Stellung nach durchgeführter Vercrimpung betreffend;
- Fig. 7: eine der Figur 5 entsprechende Darstellung, jedoch bei einer Vercrimpung eines Presslings mit gegenüber dem in Figur 5 dargestellten Pressling verringertem Durchmesser;
- Fig. 8: eine weitere der Figur 5 entsprechende Darstellung, bei weiter verringertem Pressling-Durchmesser gegenüber der Darstellung in Figur 7;
- Fig. 9: eine Folgedarstellung zu Figur 3, die Nutzung der Handzange im Zuge eines Abisoliervorgangs betreffend;
- Fig. 10: die Herausvergrößerung des Bereiches X in Figur 9;
- Fig. 11: eine Folgedarstellung zu Figur 10, eine Zwischenstellung im Zuge des Abisoliervorgangs betreffend;

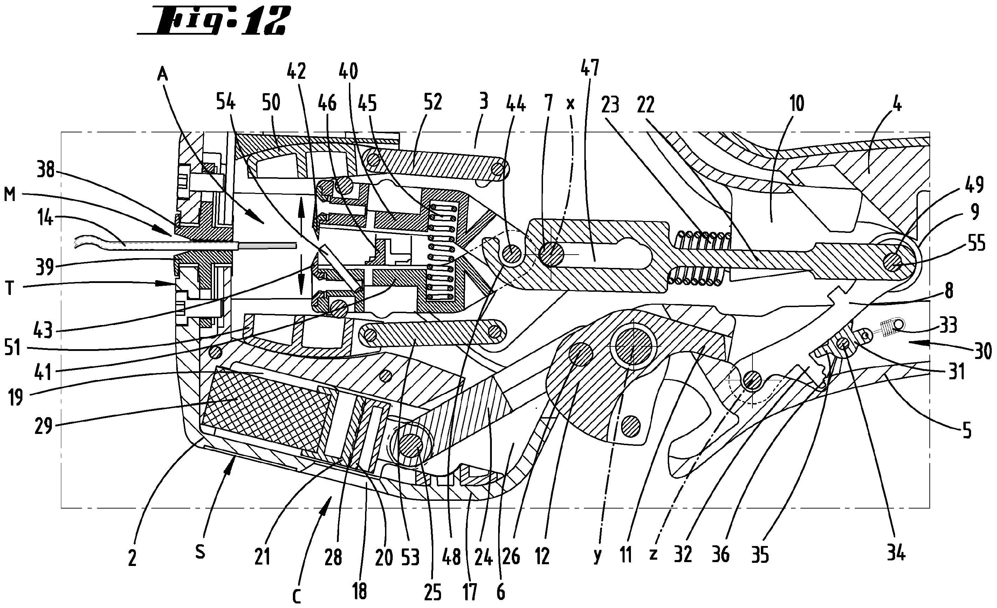

- Fig. 12: eine Folgedarstellung zu Figur 11, betreffend eine Stellung nach Vollendung des Abisoliervorgangs.

### Beschreibung der Ausführungsformen

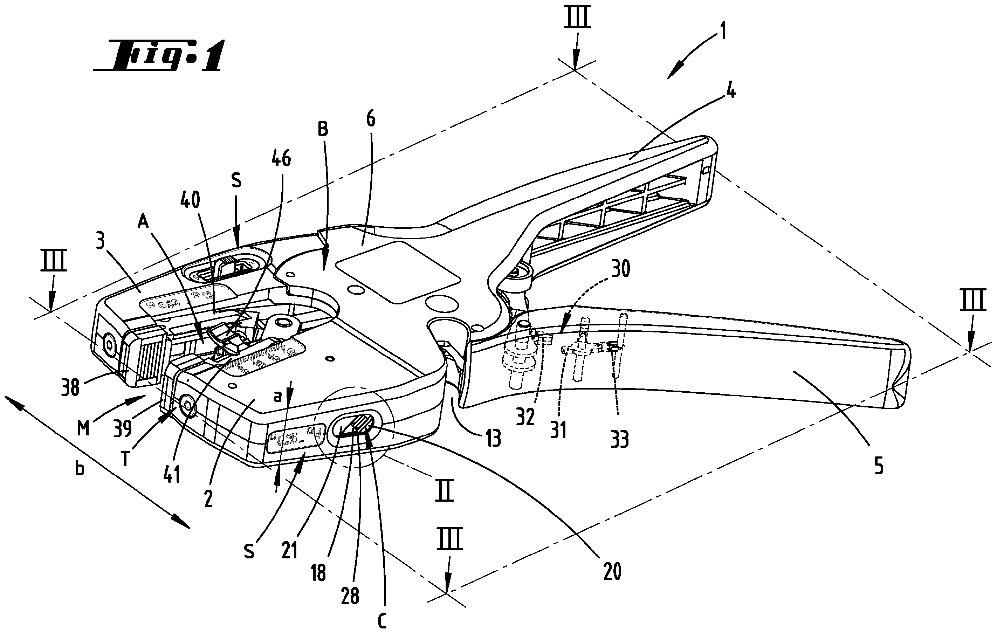

Dargestellt und beschrieben ist, zunächst mit Bezug zu Figur 1, eine Handzange 1 mit einem Zangenkopf K, aufweisend zwei Zangenbacken 2, 3, und zwei Zangenschenkeln 4, 5. Die Zangenbacken 2 und 3 begrenzen ein Zangenmaul M in einer Stirnseite T der Handzange 1.

Die Zangenbacke 2, die nachstehend als feststehend bezeichnet ist, ist über einen Wangenbereich 6 unmittelbar und fest mit dem Zangenschenkel 4 verbunden.

Im Wangenbereich 6 bietet die Abisolierzange 1 eine Lagerung für eine Drehachse 7 mit einer geometrischen Achse x an, um welche die weiter nachstehend bewegliche Zangenbacke 3 drehbar gehaltert ist.

Die Lagerung der beweglichen Zangenbacke 3 an der Drehachse 7 ergibt sich im Bereich eines in Erstreckungsrichtung der Achse x in Projektion zu dem Wangenbereich 6 der feststehenden Zangenbacke 3 sich erstreckenden Schulterbereiches der beweglichen Zangenbacke 3.

Die geometrische Achse x erstreckt sich dabei bevorzugt senkrecht zu einer Breitseite B des Zangenkopfs K, zu welcher Breitseite B im Wesentlichen senkrecht und in der üblichen Handhabungsstellung ober- und unterseitig Schmalseiten S verlaufen, deren senkrecht zu einer Breitseite B betrachtete Erstreckungslänge a einem Drittel oder weniger, beispielsweise bis hin zu einem Zehntel oder weniger, der quer zu der Achse x betrachteten Erstreckungslänge b der Breitseite B entsprechen kann.

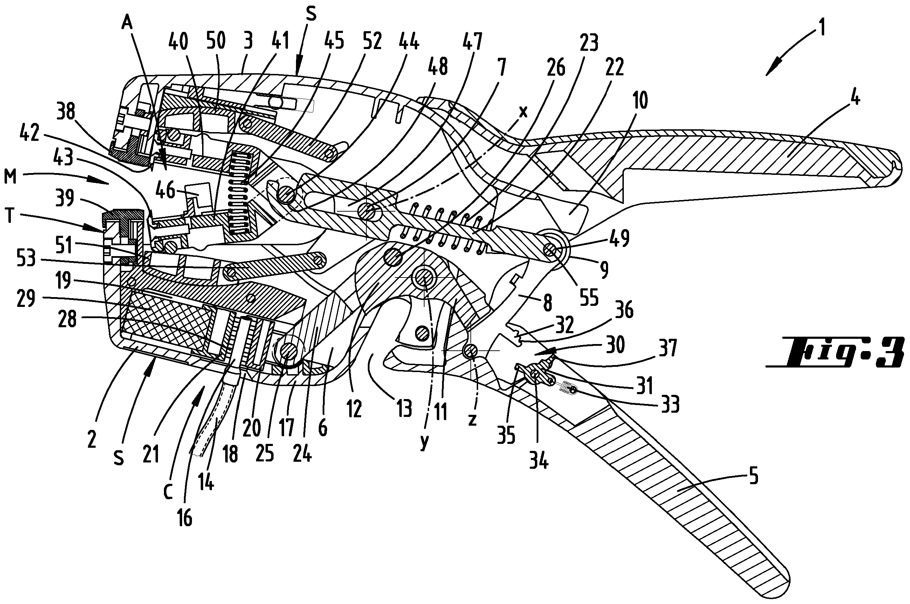

Die Zangenmaul-Offenstellung, beispielsweise gemäß der Darstellung in Figur 3, kann anschlagbegrenzt sein.

Der weitere Zangenschenkel 5 ist um eine weitere, parallel zur Drehachse 7 beziehungsweise deren geometrischen Achse x ausgerichtete geometrische Achse y schwenkgelagert. Die diesbezügliche körperliche Achse ist gleichfalls in dem Wangenbereich 6 der feststehenden Zangenbacke 2 beziehungsweise des feststehenden Zangenschenkels 4 gehaltert.

Der bewegliche Zangenschenkel 5 ist um die Achse y in Richtung auf den feststehenden Zangenschenkel 4 schwenkbar, wobei eine Schwenkverlagerung des beweglichen Zangenschenkels 5 in Richtung auf den feststehenden Zangenschenkel 4 eine gekoppelte Schwenkbewegung der beweglichen Zangenbacke 3 um die Achse x bewirkt.

Hierzu ist an dem beweglichen Griffteil 5 ein bevorzugt abgewinkelt verlaufender Steuerhebel 8 befestigt, der mit seinem freien Ende, in dem dargestellten Ausführungsbeispiel mit einer in diesem Bereich bevorzugt angeordneten Rolle 9, an einen bspw. kulissenartig ausgebildeten Ausleger 10 des Schulterbereiches der beweglichen Zangenbacke 3 anliegt.

Der Steuerhebel 8 ist an dem beweglichen Zangenschenkel 5 schwenkbeweglich gehaltert. Die diesbezügliche Schwenkachse z verläuft bevorzugt parallel zur geometrischen Drehachse x.

Darüber hinaus wirkt das bewegliche Griffteil 5 über einen Lenker 11 auf eine in dem Wangenbereich 6 der feststehenden Zangenbacke 2 schwenkgelagerte Schneide 12 ein. Die Lagerung der Schneide 12 erfolgt im Wangenbereich 6, wobei die diesbezügliche geometrische Achse ebenfalls parallel verläuft zu der geometrischen Drehachse x der beweglichen Zangenbacke 3.

Die Schneide 12 liegt in einem freigeschnittenen Bereich 13 des Wangenbereiches 6 in der bei üblicher Handhabung bevorzugt nach unten weisenden Schmalseite S frei und dient bevorzugt zum Ablängen eines Kabels, beispielsweise eines in einem weiteren Schritt abzuisolierenden Kabels.

Durch die Schwenkbewegung der Schneide 12 im Zuge der Schwenkverlagerung des beweglichen Zangenschenkels 5 in Richtung auf den feststehenden Zangenschenkel 4 wird ein gegebenenfalls in dem Bereich 13 einliegendes Kabel unter Abstützung des Kabels an den Flanken des Wangenbereiches 6, welche den Bereich 13 begrenzen, durch die verschwenkende Schneide 12 durchtrennt.

Zugewandt der Stirnseite T, insbesondere dem Zangenmaul M, weist die Handzange 1 eine Abisoliervorrichtung A auf, die mit der Bewegung des Zangenschenkels 5 sowie des Steuerhebels 8 gekoppelt ist.

Weiter weist die Handzange 1, zugewandt einer bei üblicher Handhabung unteren Schmalseite S eine Crimpvorrichtung C auf, in welcher ein beispielsweise mit der Abisoliervorrichtung A abisoliertes Kabel 14 im Bereich der hiernach freigelegten Adern 15 mit einem Pressling 16, insbesondere in Form einer Aderendhülse, verpresst werden kann.

Die Crimpvorrichtung C kann dabei, wie auch bevorzugt, zwischen dem Bereich 13 zum Schneiden eines Kabels und der Stirnseite T vorgesehen sein, wozu in der die diesbezügliche Schmalseite S bildenden Backenwandung 17 der feststehenden Zangenbacke 2 eine Crimpöffnung 18 belassen ist.

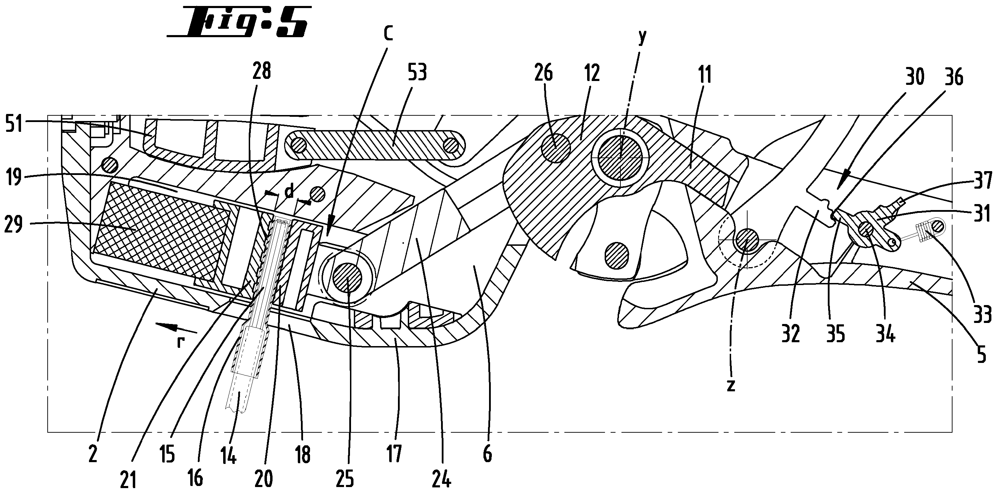

In der feststehenden Zangenbacke 2 ist weiter zugeordnet der Crimpöffnung 18 eine Crimpbackenaufnahme 19 ausgebildet, in welcher eine erste Crimpbacke 20 und eine zweite Crimpbacke 21 gemeinsam aufgenommen und linear geführt sind. Eine beispielsweise in Figur 5 dargestellte Verlagerungsrichtung r der Crimpbacken 20 und 21 kann, wie weiter bevorzugt, im Wesentlichen gleichgerichtet sein zu einer Ausrichtung und Verlagerungsrichtung einer mit dem Steuerhebel 8 schwenkbar verbundenen und mit der Abisoliervorrichtung A zusammenwirkenden Zugstange 22.

Zwischen dieser Zugstange 22 und dem Ausleger 10 ist bevorzugt eine Feder 23, hier eine Zylinder-Druckfeder, angeordnet, die den beweglichen Zangenschenkel 5 in Richtung auf die in Figur 3 dargestellte Grundstellung belastet. In dieser Grundstellung kann zudem die bewegliche Zangenbacke 3 in einer anschlagbegrenzten Grundstellung gehalten sein.

In dem dargestellten Ausführungsbeispiel ist die zweite Crimpbacke 21, ausgehend von der Crimpöffnung 18, der Stirnseite T zugewandt angeordnet und im Zuge eines Crimpvorganges nur mittelbar linear in der Crimpbackenaufnahme 19 verlagerbar . Die erste Crimpbacke 20 hingegen ist unmittelbar zufolge Einwirkung eines Antriebsstößels 24 in der Crimpbackenaufnahme 19 linear verlagerbar, welcher Antriebsstößel 24 sowohl an der ersten Crimpbacke 20 als auch an dem Lenker 11 beziehungsweise an der Schneide 12 schwenkbeweglich um eine bevorzugt parallel zu den Achsen x und/oder y und/oder z ausgerichtete Achsen 25 und 26 gelagert ist. Der Antriebsstößel 24 ist lenkerartig gebildet.

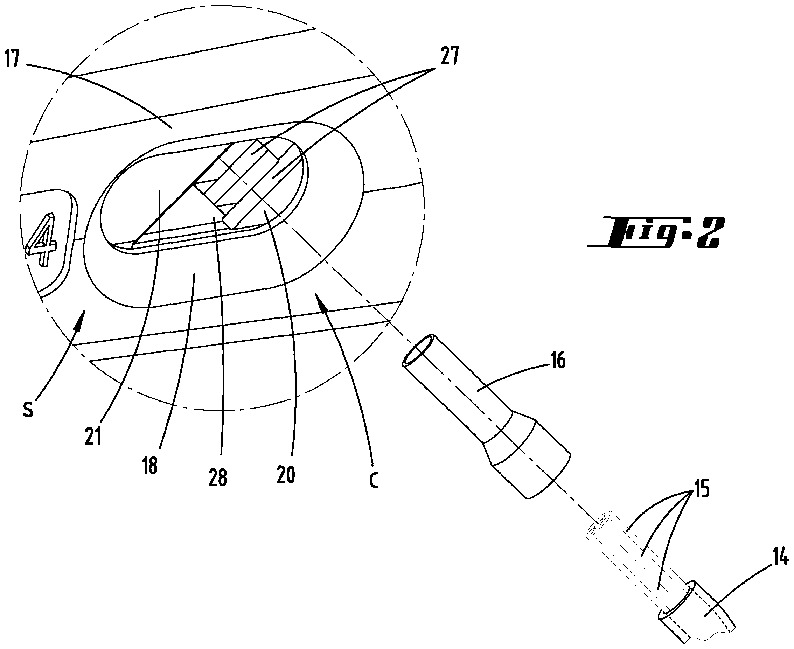

Die beiden Crimpbacken 20 und 21 sind mit partiell kammartig ineinandergreifenden Rippen 27 versehen, die mit Blick in Richtung einer Einsteckrichtung des mit dem Pressling 16 versehenen Kabels 4 in die Crimpöffnung 18 etwa dreieckförmig gestaltet sind. Hieraus ergibt sich in einer unbelasteten Grundstellung gemäß Figur 3 ein im Grundriss rechteckiges, insbesondere quadratisches Crimpmaul 28 (vergleiche beispielsweise Figur 2).

Bezüglich der rippenartigen Ausgestaltung der Crimpbacken 20 und 21 und der dadurch gegebenen Ausgestaltung des Crimpmauls 28 wird beispielsweise auf die DE 10 2018 101 159 A1 verwiesen.

Die in der Crimpbackenaufnahme 19 geführte zweite Crimpbacke 21 stützt sich über eine Feder 29 in einem Bodenbereich der Crimpbackenaufnahme 19 ab. Hierbei kann es sich, wie auch bevorzugt, um eine elastische rückstellfähige Polyurethan-Feder handeln, die entsprechend bei Beaufschlagung unter Aufbau einer Rückstell-Federkraft komprimierbar ist.

Die Zangenschenkel 4 und 5 wirken bei Betätigung bevorzugt über eine Zwangssperre 30 zusammen. Letztere wirkt bevorzugt sowohl bezüglich der Crimpvorrichtung C als auch bezüglich der Abisoliervorrichtung A, gegebenenfalls auch bezüglich der Schneidvorrichtung zum Schneiden von Kabeln unter Nutzung der Schneide 12.

Die Zwangssperre 30 weist eine schwenkbeweglich an dem beweglichen Zangenschenkel 5 gehalterte Klinke 31 auf und einen mit der Klinke 31 im Zuge der Handhabung der Handzange 1 zusammenwirkenden Ratschenvorsprung 32 an dem Steuerhebel 8 auf. Die Klinke 31 ist dabei über eine Zugfeder 33 in eine Grundausrichtung beispielsweise gemäß Figur 3 belastet.

Die um eine parallel zu den vorbeschriebenen Achsen ausgerichtete Achse 34 schwenkbare Klinke 31 besitzt einen im Wesentlichen radial abragenden Klinkenfinger 35, zur ratschenden Zusammenwirkung mit mehreren Raststufen 36, beispielsweise, wie dargestellt, drei Raststufen 36, des Ratschenvorsprung 32.

In Umfangsrichtung bezüglich der Achse 34 versetzt zu dem Klinkenfinger 35 kann ein Betätigungsfinger 37 vorgesehen sein, über welchen manuell die Klinke 31 gegebenenfalls in eine den Ratschenvorsprung 32 freigebende Stellung schwenkverlagert werden kann.

Bezüglich der Verschwenkbarkeit der Klinke 31 kann eine Anschlagbegrenzung in der einen und/ oder anderen Schwenkrichtung gegeben sein.

Zufolge der Zwangssperre 30 ist bei üblicher Handhabung der Handzange 1 sichergestellt, dass der Crimpvorgang beziehungsweise der Abisoliervorgang, gegebenenfalls der Schneidvorgang, vollständig abgeschlossen ist, entsprechend jeweils eine bevorzugte Endstellung des jeweiligen Werkzeugs erreicht ist. Vor Erreichen dieser Endstellung ist durch die Zusammenwirkung von Klinke 31 und Ratschenvorsprung 32 eine Rückverlagerung des beweglichen Zangenschenkels 5 in Richtung auf die Grundstellung und somit einhergehend eine Rückverlagerung der beweglichen Zangenbacke 3 und/oder der Crimpbacken 20 und 21 in die Grundstellung verhindert. Der Klinkenfinger 35 wirkt in diesen Handhabungs-Zwischenstellungen mit einer der Raststufen 36 sperrend zusammen.

Zufolge der Anordnung der Zwangssperre 30 ergibt sich im Wesentlichen unabhängig von einer in Verlagerungsrichtung r der Crimpbacken 20 und 21 betrachteten Dicke d des Presslings 16 ein stets gleichlanger Verlagerungsweg der mit dem Antriebsstößel 24 verbundenen ersten Crimpbacke 20. Der sich in Abhängigkeit von der Dicke d des Presslings 16 ergebende Differenzweg, über den sich die zweite Crimpbacke 21 linear zu der ersten Crimpbacke 20 in Verlagerungsrichtung r mitverlagern muss, ist durch die Anordnung der Feder 29 ermöglicht. Die entsprechende Abstützung der zweiten Crimpbacke 21 über die Feder 29 lässt eine unterschiedliche lineare Verlagerung der zweiten Crimpbacke 21 über den Differenzweg zu, wobei gemäß einer bevorzugten Ausgestaltung die Federkraft der Feder 29 insbesondere in der bezüglich der zweiten Crimpbacke 21 bevorzugt anschlagbegrenzten Ausgangsstellung gemäß Figur 3 ausreichend hoch sein kann, um die bei einer üblichen Verpressung auftretenden, über die erste Crimpbacke 20 einwirkenden Presskräfte aufnehmen zu können. Eine Verlagerung der zweiten Crimpbacke 21 entgegen der Rückstellkraft der Feder 29 kann so erst mit Vollendung der Vercrimpung erfolgen oder auch alternativ einhergehend mit der Vercrimpung.

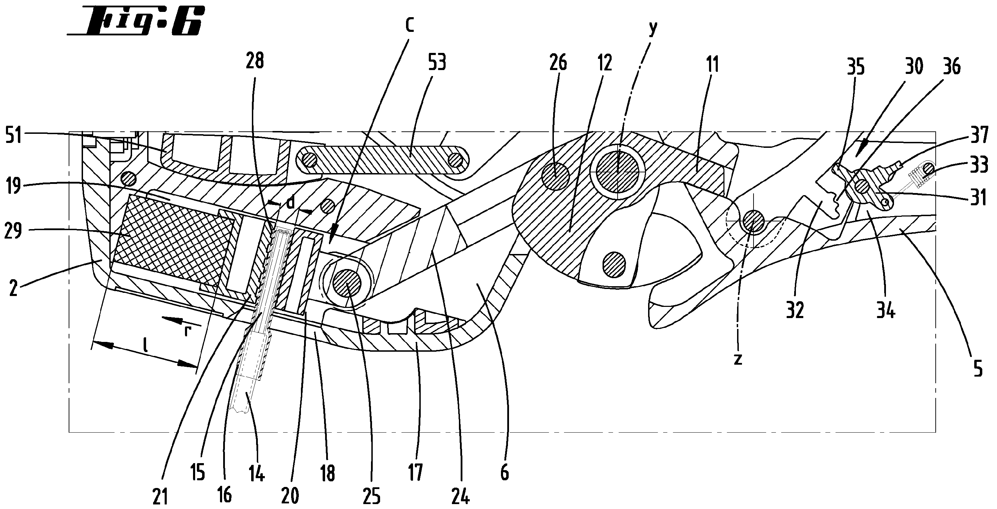

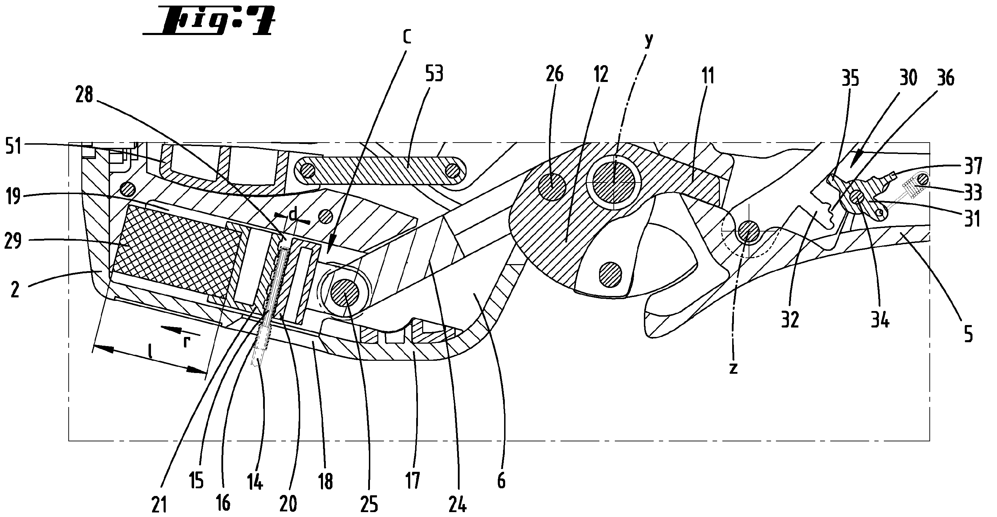

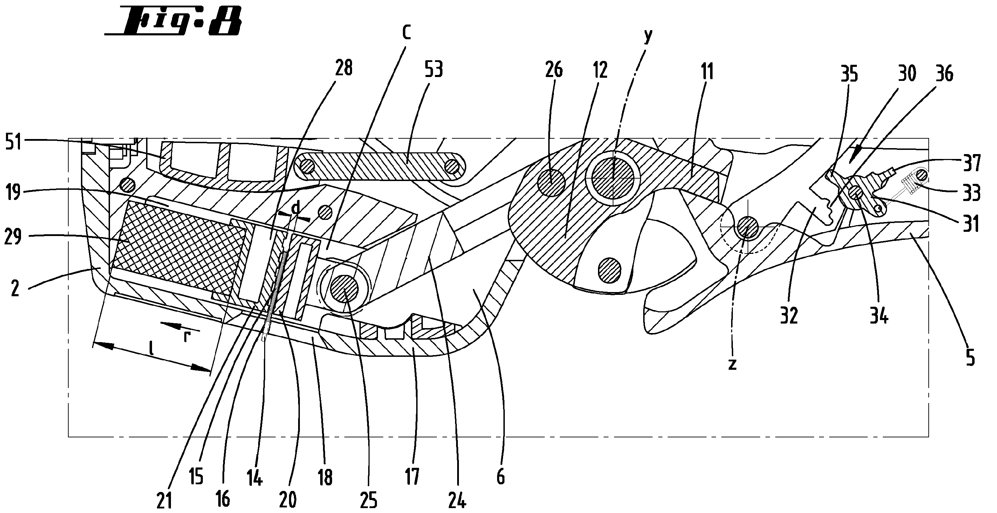

Einhergehend mit den unterschiedlich möglichen Verlagerungswegen der zweiten Crimpbacke 21 in Abhängigkeit von der Dicke d des zu verpressenden Presslings 16 ergeben sich unterschiedliche Längen l der Feder 29 in der Crimpendstellung, wobei sich diese Länge l mit zunehmender Dicke d des Presslings 16 reduziert (vergleiche insbesondere die Figuren 6 bis 8). Entsprechend ergibt sich mit zunehmender Dicke d des Presslings 16 eine höhere Komprimierung der Feder 29 zum Ausgleich des über die Zwangssperre 30 erzwungenen Verlagerungswegs insbesondere der zweiten Crimpbacke 21.

Im Zuge des Crimpvorgangs wandert ein Mittelpunkt des sich zwischen den Crimpbacken ergebenden Crimpmauls 28 relativ zu der feststehenden Zangenbacke 2.

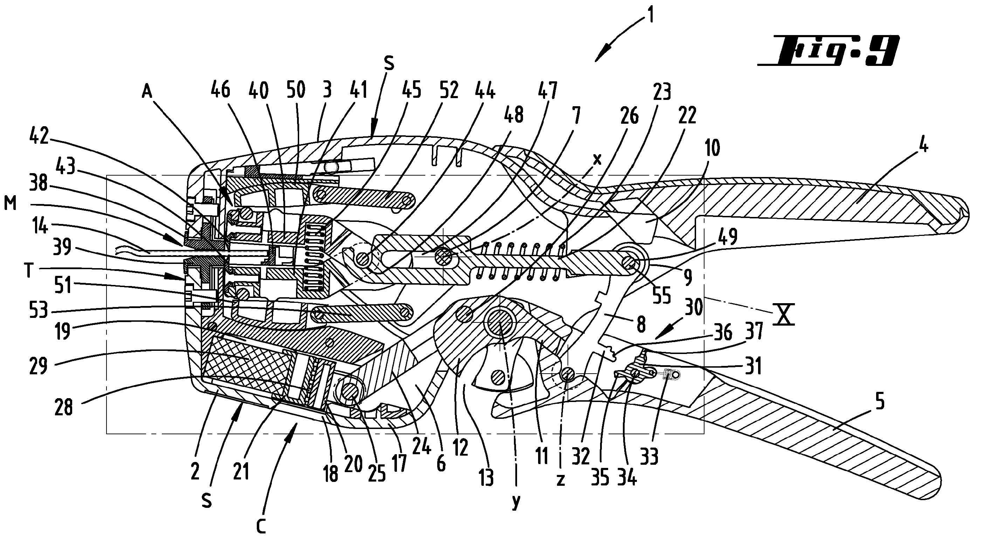

Die beiden Zangenbacken 2 und 3 weisen weiter jeweils eine äußere Klemmbacke 38, 39 auf, zur klemmenden Erfassung eines zur Abisolierung eines freien Endes in das Zangenmaul M eingelegten Kabels 14, vergleiche auch Figuren 9 bis 10.

Darüber hinaus sind zwei, mit Bezug auf die Anordnung der Klemmbacken 38 und 39 relativ zu der geometrischen Drehachse x, innere Schneidbacken 40, 41 vorgesehen, mit jeweils in den Klemmbacken 38 und 39 zugewandten Endbereich festgelegten Schneiden 42, 43. Die Schneiden 42 und 43 sind aufeinander zuweisend angeordnet.

Die geometrische Achse der Schwenkachse 44 erstreckt sich in betriebsbereiter Anordnung des Schneidbacken-Paares bevorzugt in Parallelausrichtung zu der Drehachse x der beweglichen Zangenbacke 3.

Zwischen den Schneidbacken 40 und 41 ist eine Feder 45 angeordnet, welche Feder 45 die Schneidbacken 40 und 41 in eine zueinander distanzierte Offenstellung belastet.

In dem dargestellten Ausführungsbeispiel ist an der unteren Schneidbacke 41, d.h. an der der feststehenden Zangenbacke 2 zugeordneten Schneidbacke 41 ein in Erstreckungsrichtung der Schneidbacke 41 rastfestlegbarer Anschlagschlitten 46 vorgesehen, zum Anbieten eines Anschlages für das freie, in das Zangenmaul M eingeführte Ende des Kabels 14, um hierüber die Länge des abzuisolierenden Bereiches zu definieren.

Die Schneidbacken 40 und 41 sind in der jeweils zugeordneten Zangenbacke 2, 3 seitlich geführt, zur Ermöglichung einer ordnungsgemäßen Schiebeverlagerung der Schneidbacken 40 und 41 in Richtung ihrer Längserstreckung, d.h. ausgehend von einer den Klemmbacken 38 und 39 zugeordneten Ausgangsstellung in Richtung einer zu den Klemmbacken 38 und 39 beabstandeten und in Richtung auf die Drehachse x verlagerten Endstellung und aus dieser Endstellung wieder zurück in die Ausgangsstellung.

Für diese Verlagerung der Schneidbacken 40, 41 ist die Zugstange 22 vorgesehen. Die Schneidbacken 40, 41 können im Zuge eines Zusammendrückens der Griffteile 4, 5 gegen die Kraft der auf die Zugstange 22 wirkenden Feder 23 aus einer Ausgangsstellung in eine Endstellung verlagert werden.

Die Zugstange 22 ist auch unter Durchsetzung einer zugstangenseitigen, langlochartigen Ausnehmung 47 durch die körperliche Drehachse 7 geführt.

Zugeordnet der Schwenkachse 44 des Schneidbacken-Paares weist die Zugstange 22 eine im Wesentlichen in Richtung auf die feststehende Zangenbacke 2, darüber hinaus im Wesentlichen in Schließ- beziehungsweise Öffnungsrichtung der Schneidbacken 40 und 41 gerichtete Einfahröffnung 48 auf. Diese ist geschaffen durch eine insgesamt hakenartige Ausgestaltung des diesbezüglichen Endbereiches der Zugstange 22.

In dieser Einfahröffnung 48 liegt in üblicher Nutzungsstellung der Handzange 1 die Schwenkachse 44 des Schneidbacken-Paares ein, so dass eine zufolge der langlochartigen Ausgestaltung der Ausnehmung 47 ermöglichte Schiebeverlagerung der Zugstange 22 zu einer entsprechenden Schiebeverlagerung des Schneidbacken-Paares führt.

Diese Schiebeverlagerung der Zugstange 22 ist über eine Kopplung mit den am beweglichen Griffteil 5 gehalterten Steuerhebel 8 ermöglicht, welcher Steuerhebel 8 mit einer parallel zur Drehachse 7 ausgerichteten Zugachse 55, die in dem dargestellten Ausführungsbeispiel zugleich die Achse für die Rolle 9 bilden kann, in eine zugstangenseitige Bohrung 49 eingreift.

Jede Schneidbacke 40, 41 stützt sich in der zugeordneten Zangenbacke 2, 3 über ein Kulissenteil 50, 51 ab, welches Kulissenteil 50, 51 sich wiederum an einer klemmbackenfesten Kulisse abstützen kann.

Diese mittelbare Abstützung der Schneidbacken 40, 41 an der jeweiligen Zangenbacke 2, 3 ist beispielsweise aus der EP 1 557 920 B1 bekannt. Es wird bezüglich der Wirkungsweise auch auf den Inhalt dieser Patentschrift verwiesen.

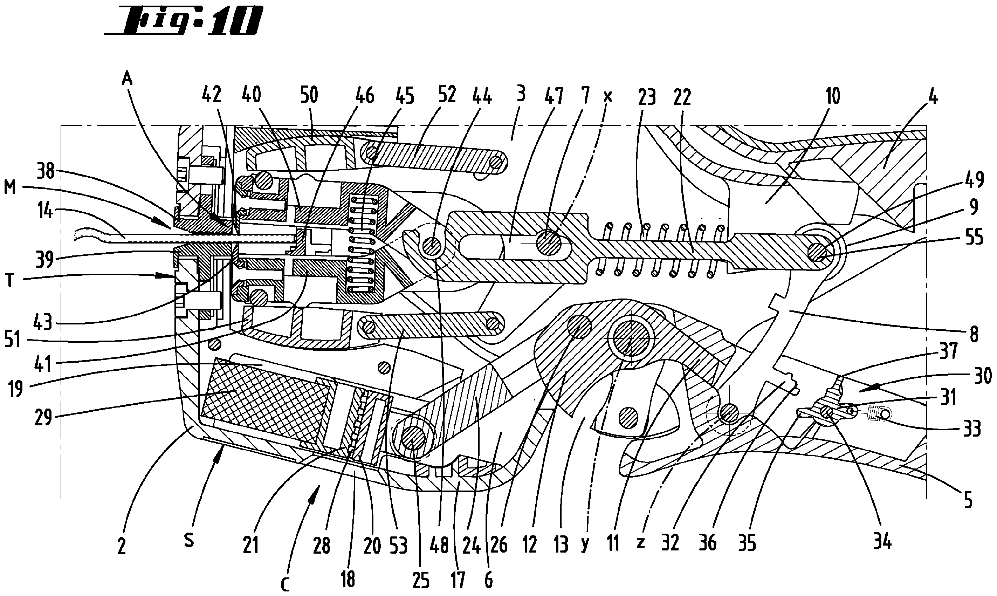

Im Zuge des Zusammendrückens der Zangeneschenkel 4 und 5 wird zunächst ein Schließen des Zangenmauls M zufolge entsprechender Schwenkverlagerung der beweglichen Zangenbacke 3 unter Überlagerung einer Schließung des Schneidbacken-Paares durchgeführt (vergleiche Figuren 9 und 10). Die Schneiden 42 und 43 der Schneidbacken 40 und 41 schneiden in den Isolationsmantel des Kabels 14 ein, dies mit einer Einschnitttiefe, die in Abhängigkeit von der Kabeldicke sich bevorzugt automatisch einstellt.

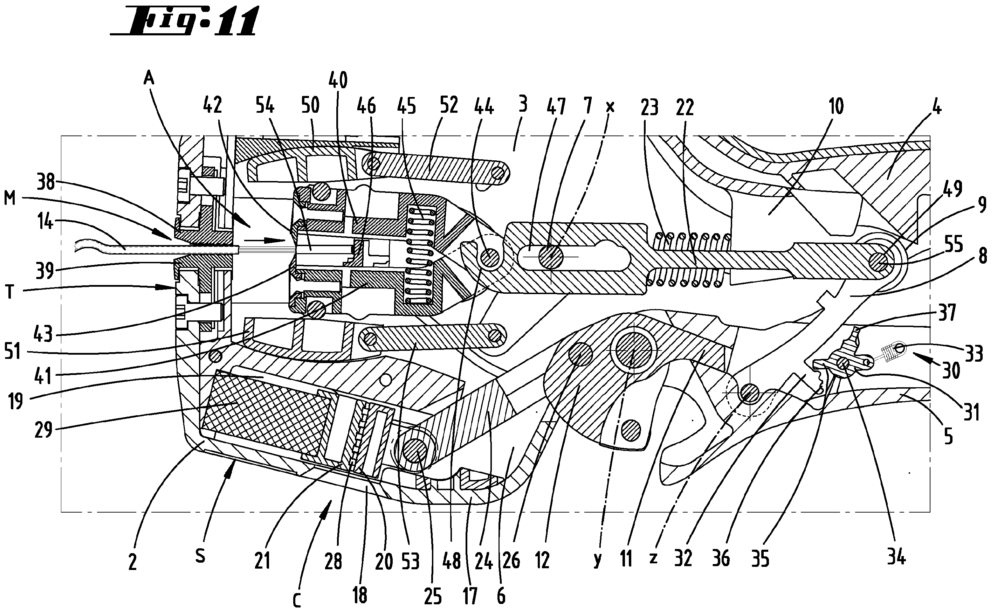

Bei weiterer Schwenkverlagerung des beweglichen Zangenschenkels 5 in Richtung auf den feststehenden Zangenschenkels 4 gemäß der Darstellung in Figur 11 gleitet die Rolle 9 des Auslegers 10 entlang der zugewandten und vorbeschriebenen Stirnfläche des Auslegers 10 unter Überwindung der Rückstellkraft der auf die Zugstange 22 einwirkenden Feder 23. Die Zugstange 22 wird linear in eine sich zum Zangenmaul M entfernende Richtung gezogen, unter Mitschleppung des Schneidbacken-Paars. Hierdurch erfolgt das Abstreifen des durch Einschneiden mittels der Schneiden 42 und 43 separierten Isolierungsabschnittes 54 vom Kabel 14.

Bei einem weiteren Zusammendrücken der Zangenschenkel 4 und 5 verlässt die auslegerseitige Rolle 9 die abstützende Stellung zu dem Ausleger 10 der beweglichen Zangenbacke 3, welche zurück in Richtung auf ihre Offen-Grundstellung verschwenkt, unter gleichzeitiger Öffnung des Zangenmauls M, wie auch des Schneidbacken-Paares. Dies unter anderem bedingt durch die Rückstellkraft der zwischen den Schneidbacken 40 und 41 vorgesehenen Feder 45.

Das endseitig abisolierte Kabel 14 liegt zur Entnahme aus der Handzange 1 frei. Der abgetrennte und abgezogene Isolierungsabschnitt 54 liegt zur Entnahme frei oder fällt gegebenenfalls selbsttätig aus dem Zangenmaul M.

Anschließend kann das abisolierte und beispielsweise mit einer Aderendhülse versehene Ende des Kabels mit derselben Handzange 1 vercrimpt beziehungsweise verpresst werden.

**Liste der Bezugszeichen**

| | | | |
|---|---|---|---|
| 1 | Handzange | 30 | Zwangssperre |
| 2 | Zangenbacke | 31 | Klinke |
| 3 | Zangenbacke | 32 | Ratschenvorsprung |
| 4 | Zangenschenkel | 33 | Zugfeder |
| 5 | Zangenschenkel | 34 | Achse |
| 6 | Wangenbereich | 35 | Klinkenfinger |
| 7 | Drehachse | 36 | Raststufe |
| 8 | Steuerhebel | 37 | Betätigungsfinger |
| 9 | Rolle | 38 | Klemmbacke |
| 10 | Ausleger | 39 | Klemmbacke |
| 11 | Lenker | 40 | Schneidbacke |
| 12 | Schneide | 41 | Schneidbacke |
| 13 | Bereich | 42 | Schneide |
| 14 | Kabel | 43 | Schneide |
| 15 | Ader | 44 | Schwenkachse |
| 16 | Pressling | 45 | Feder |
| 17 | Backenwandung | 46 | Anschlagschlitten |
| 18 | Crimpöffnung | 47 | Ausnehmung |
| 19 | Crimpbackenaufnahme | 48 | Einfahröffnung |
| 20 | erste Crimpbacke | 49 | Bohrung |
| 21 | zweite Crimpbacke | 50 | Kulissenteil |
| 22 | Zugstange | 51 | Kulissenteil |
| 23 | Feder | 52 | Lenker |
| 24 | Antriebsstößel | 53 | Lenker |
| 25 | Achse | 54 | Islolationsabschnitt |
| 26 | Achse | 55 | Zugachse |
| 27 | Rippe | | |
| 28 | Crimpmaul | a | Länge |
| 29 | Feder | b | Länge |
| d | Dicke | | |
| l | Länge | | |
| r | Verlagerungsrichtung | | |
| A | Abisoliervorrichtung | | |
| B | Breitseite | | |
| C | Crimpvorrichtung | | |
| K | Zangenkopf | | |
| M | Zangenmaul | | |
| S | Schmalseite | | |
| T | Stirnseite | | |

## Patentansprüche

1. Zur Durchführung einer Vercrimpung ausgebildete Handzange (1) mit einem feststehenden und einem beweglichen Zangenschenkel (4, 5) sowie einer ersten und einer zweiten Crimpbacke (20, 21), wobei die erste Crimpbacke (20) durch einen Antriebsstößel (24) beaufschlagt ist, **dadurch gekennzeichnet, dass** die erste und die zweite Crimpbacke (20, 21) mit partiell kammartig ineinandergreifenden Rippen (27) versehen sind, die mit Blick in Richtung einer Einsteckrichtung eines mit einem Pressling (16) versehenen Kabels (4) in eine Crimpöffnung (18) dreieckförmig gestaltet sind, wobei sich in einer unbelasteten Grundstellung ein im Grundriss rechteckiges Crimpmaul (28) ergibt, dass die zweite Crimpbacke (21) in einer Crimpbackenaufnahme (19) der Handzange (1) gegen Federkraft zurück bewegbar ist und dass die erste und die zweite Crimpbacke (20, 21) in einer gemeinsamen Linearführung angeordnet sind.

2. Handzange (1) nach Anspruch 1, **gekennzeichnet durch** einen Zangenkopf, der durch zueinander verschwenkbare Zangenbacken (2, 3) gebildet ist, die zur Abisolierung zusammenwirken, wobei der Zangenkopf eine Breitseite (B), in einer üblichen Handhabungsstellung ober- und unterseitig im Wesentlichen senkrecht zu der Breitseite verlaufende erste und zweite Schmalseite (S) und eine Stirnseite (T) aufweist, wobei weiter eine Schwenkachse (x) der Zangenbacken (2, 3) rechtwinklig zu einer Erstreckung der Breitseite (B) verläuft und eine durch die Crimpbacken (20, 21) gebildete Crimpöffnung (18) in der ersten oder zweiten Schmalseite (S) mündet.

3. Handzange nach Anspruch 1, **dadurch gekennzeichnet, dass** die Handzange (1) weiter als Abisolierzange ausgebildet ist.

4. Handzange nach einem der vorhergehenden Ansprüche, **dadurch gekennzeichnet, dass** die Zangenschenkel (4, 5) über eine Zwangssperre (30) zusammenwirken.

5. Handzange nach Anspruch 4, **dadurch gekennzeichnet, dass** die Zwangssperre (30) zwischen einem Steuerhebel (8) und dem beweglichen Zangenschenkel (5) wirkt.

## Claims

1. Hand pliers (1), designed to carry out crimping, having one stationary and one movable plier leg (4, 5) and a first and a second crimping jaw (20, 21), wherein the first crimping jaw (20) is acted on by a drive tappet (24), **characterized in that** the first and the second crimping jaw (20, 21) are provided with ribs (27) which engage in one another in a partially comb-like manner and which are preferably approximately triangular in shape when viewed in the direction of an insertion direction of a cable (4) provided with the pressed part (16) into the crimping opening (18), wherein in an unloaded basic position, this results in a crimping mouth (28) that is rectangular in plan view, **in that** the second crimping jaw (21) can be moved back inside a crimping jaw receptacle (19) of the hand pliers (1) against spring force, and **in that** the first and the second crimping jaw (20,21) are arranged in a common linear guide.

2. The hand pliers (1) according to claim 1, **characterized by** a plier head which is formed by mutually pivotable plier jaws (2, 3) which interact for stripping, wherein the plier head has a broad side (B), a first and a second narrow side (S) extending in a usual handling position on the upper and lower sides substantially at right angles to the broad side, and an end face (T), wherein further a pivot axis (x) of the plier jaws (2, 3) extends at right angles to an extent of the broad side (B), and a crimping opening (18) formed by the crimping jaws (20, 21) opens into the first or second narrow side (S).

3. The hand pliers according to claim 1, **characterized in that** the hand pliers (1) are further designed as stripping pliers.

4. The hand pliers according to any one of the preceding claims, **characterized in that** the plier legs (4, 5) interact via a positive lock (30).

5. The hand pliers according to claim 4, **characterized in that** the positive lock (30) acts between a control lever (8) and the movable plier leg (5).

## Revendications

1. Pince manuelle (1) conçue pour effectuer un sertissage, comprenant une branche de pince fixe et une branche de pince mobile (4, 5) ainsi qu'une première et une deuxième mâchoire de sertissage (20, 21), la première mâchoire de sertissage (20) étant sollicitée par un poussoir d'entraînement (24), **caractérisée en ce que** la première et la deuxième mâchoire de sertissage (20, 21) sont pourvues de nervures (27) s'engageant partiellement les unes dans les autres à la manière d'un peigne, qui sont de forme triangulaire en regardant dans la direction d'insertion d'un câble (4) muni d'une pièce sertie (16) dans une ouverture de sertissage (18), une bouche de sertissage (28) rectangulaire en plan étant obtenue dans une position de base non chargée, **en ce que** la deuxième mâchoire de sertissage (21) peut être déplacée en arrière dans un logement de mâchoire de sertissage (19) de la pince manuelle (1) contre la force d'un ressort et **en ce que** la première et la deuxième mâchoires de sertissage (20, 21) sont disposées dans un guidage linéaire commun.

2. Pince manuelle (1) selon la revendication 1, **caractérisée par** une tête de pince qui est formée par des mâchoires de pince (2, 3) pouvant pivoter l'une par rapport à l'autre, qui coopèrent pour le dénudage, la tête de pince présentant un côté large (B), un premier et un deuxième côté étroit (S) s'étendant, dans une position de manipulation usuelle, sur le côté supérieur et le côté inférieur, essentiellement perpendiculairement au côté large, et un côté frontal (T), un axe de pivotement (x) des mâchoires de pince (2, 3) s'étendant en outre perpendiculairement à une extension du côté large (B) et une ouverture de sertissage (18) formée par les mâchoires de sertissage (20, 21) débouchant dans le premier ou le deuxième côté étroit (S).

3. Pince manuelle selon la revendication 1, **caractérisée en ce que** la pince manuelle (1) est en outre conçue comme une pince à dénuder.

4. Pince manuelle selon l'une des revendications précédentes, **caractérisée en ce que** les branches de la pince (4, 5) coopèrent par l'intermédiaire d'un blocage forcé (30).

5. Pince manuelle selon la revendication 4, **caractérisée en ce que** le blocage forcé (30) agit entre un levier de commande (8) et la branche mobile (5) de la pince
